# EUROPEAN PATENT APPLICATION

(11) **EP 2 648 034 A1**
(43) Date of publication of application: **09.10.2013**
(21) Application number: 13162225.0
(22) Date of filing: 03.04.2013
(51) Int. Cl.: G02F 1/13363, G02F 1/1335

(54) **Display panel and display apparatus having the same**

(30) Priority: 03.04.2012 KR 20120034635; 03.04.2012 KR 20120034638; 01.06.2012 KR 20120059010
(71) Applicant: Samsung Electronics Co., Ltd., Gyeonggi-do 443-742 (KR)
(72) Inventor: Jung, Il-Yong, Gyeonggi-do (KR); Chung, Seong-Eun, Seoul (KR); Tsukasa, Yamada, Gyeonggi-do (KR)
(74) Representative: Misselbrook, Paul

(57) **Abstract**

A display panel of a display apparatus includes: an upper substrate; a lower substrate which faces the upper substrate; a liquid crystal layer which is positioned between the upper substrate and the lower substrate; and a retardation layer which is interposed between the upper substrate and the lower substrate and which compensates for a retardation of light which is caused by the liquid crystal layer when the light passes through the liquid crystal layer and is received by the upper substrate.

## Description

### BACKGROUND

### Field

Apparatuses and methods consistent with the exemplary embodiments relate to a display panel which displays an image on its flat surface and a display apparatus having the same, and more particularly, to a display panel and a display apparatus having the same which includes a liquid crystal display (LCD) panel which displays an image by using light emitted by a backlight device and has an improved structure for compensating for a viewing angle.

### Description of the Related Art

A display apparatus includes a display panel for displaying an image thereon, and displays a broadcasting signal or various types of image signals and/or image data. The display apparatus may be implemented as a television (TV) or a monitor. The display panel may be implemented as any of various types, such as, for example, a liquid crystal display (LCD) panel or a plasma display panel, depending on its features, and each of the various types applies to various display apparatuses. If an LCD panel which cannot generate light by itself is used as a display panel, the display apparatus employs a backlight device for generating and emitting light to the display panel.

The LCD panel may include various films installed therein for adjusting the features of the light emitted by the backlight unit, and light loss may occur when the light passes through the LCD layer and a film layer and is emitted by the panel. In particular, the aforementioned film layer may include a polarizing film which filters a polarization component in a particular direction. However, such absorption of light by the polarizing film may cause significant light loss. Further, depending on a viewing angle, visibility may deteriorate as a result of a change in contrast ratio and gray scale inversion. Thus, securing the viewing angle may arise as a major issue in the LCD panel.

### SUMMARY

The foregoing and/or other aspects may be achieved by providing a display panel of a display apparatus including: an upper substrate; a lower substrate which faces the upper substrate; a liquid crystal layer which is positioned between the upper substrate and the lower substrate; and a retardation layer which is interposed between the upper substrate and the lower substrate and which compensates for a retardation of light which is caused by the liquid crystal layer when the light passes through the liquid crystal layer and is received by the upper substrate.

The retardation layer may include a negative retardation which offsets an optical retardation caused by a double refraction nature included in the liquid crystal layer.

The display panel may further including a polarizing film which is provided in at least one of a light exit direction of the upper substrate and a light entrance direction of the lower substrate and which transmits light in a predetermined polarizing direction with respect to incident light.

The display panel may further including a color filter layer which is interposed in at least one of between the liquid crystal layer and the lower substrate and between the upper substrate and the retardation layer, and which filters incident light such that light having a predetermined color is received by each cell of the liquid crystal layer.

The polarizing film may include a polarizing layer which polarizes light, and a tri-acetate cellulose (TAC) film which is provided in each of a light exit direction of the polarizing layer and a light entrance direction of the polarizing layer and which protects the polarizing layer.

The polarizing film may be positioned external to the retardation layer.

The display panel may further including a polarizing layer which is positioned in at least one of between the upper substrate and the liquid crystal layer and between the lower substrate and the liquid crystal layer, and which includes a linear grid arranged in a predetermined pitch for transmitting light in a predetermined polarizing direction with respect to incident light.

The retardation layer may be interposed between the polarizing layer and the liquid crystal layer if the polarizing layer is positioned between the upper substrate and the liquid crystal layer.

The display panel may further including a color filter layer which is interposed in at least one of between the liquid crystal layer and the lower substrate and between the liquid crystal layer and the upper substrate, and which filters incident light such that light having a predetermined color is received by each pixel of the liquid crystal layer.

Each pixel of the liquid crystal layer may include a respective plurality of sub pixels which respectively correspond to a respective plurality of colors, and at least one of a first polarizing layer which is positioned between the upper substrate and the liquid crystal layer and a second polarizing layer which is positioned between the lower substrate and the liquid crystal layer may include an interval relating to the predetermined pitch which relates to a respective wavelength of each color of the respective plurality of colors such that light having each respective color is received by each corresponding sub pixel of the plurality of sub pixels.

Another aspect may be achieved by providing a display apparatus including: a display panel; and a backlight device which emits light toward the display panel in order to display an image on the display panel, wherein the display panel includes an upper substrate; a lower substrate which faces the upper substrate; a liquid crystal layer which is positioned between the upper substrate and the lower substrate; and a retardation layer which is interposed between the upper substrate and the liquid crystal layer and which compensates for a retardation of the emitted light which is caused by the liquid crystal layer when the emitted light passes through the liquid crystal layer and is received by the upper substrate.

The retardation layer may include a negative retardation which offsets an optical retardation caused by a double refraction nature included in the liquid crystal layer.

The display panel may further include a polarizing film which is provided in at least one of a light exit direction of the upper substrate and a light entrance direction of the lower substrate and which transmits light in a predetermined polarizing direction with respect to incident light.

The display panel may further include a color filter layer which is interposed in at least one of between the liquid crystal layer and the lower substrate and between the upper substrate and the retardation layer, and which filters incident light such that light having a predetermined color is received by each cell of the liquid crystal layer.

The polarizing film may include a polarizing layer which polarizes light, and a tri-acetate cellulose (TAC) film which is provided in each of a light exit direction of the polarizing layer and a light entrance direction of the polarizing layer and which protects the polarizing layer.

The polarizing film may be positioned external to the retardation layer.

The display panel may further include a polarizing layer which is positioned in at least one of between the upper substrate and the liquid crystal layer and between the lower substrate and the liquid crystal layer, and which includes a linear grid arranged in a predetermined pitch for transmitting light in a predetermined polarizing direction with respect to incident light.

The retardation layer may be interposed between the polarizing layer and the liquid crystal layer if the polarizing layer is positioned between the upper substrate and the liquid crystal layer.

The display panel may further include a color filter layer which is interposed in at least one of between the liquid crystal layer and the lower substrate and between the liquid crystal layer and the upper substrate, and which filters incident light such that light having a predetermined color is received by each pixel of the liquid crystal layer.

Each pixel of the liquid crystal layer may include a respective plurality of sub pixels which respectively correspond to a respective plurality of colors, and at least one of a first polarizing layer which is positioned between the upper substrate and the liquid crystal layer and a second polarizing layer which is positioned between the lower substrate and the liquid crystal layer may include an interval relating to the predetermined pitch which relates to a respective wavelength of each color of the respective plurality of colors such that light having each respective color is received by each corresponding sub pixel of the plurality of sub pixels.

The backlight device may include a light source which emits light; a light guiding plate which guides the emitted light from the light source to the display panel; and an optical sheet which is interposed between the light guiding plate and the display panel.

The display apparatus may further including a signal receiver which receives an image signal; and a signal processor which processes the received image signal based on a predetermined image processing operation for displaying an image on the display panel based on the received image signal.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is an exploded perspective view of a display apparatus according to a first exemplary embodiment;

FIG. 2 is a sectional view of elements of a display panel illustrated in FIG. 1;

FIG. 3 illustrates a method for forming a retardation layer of the display panel illustrated in FIG. 1;

FIG. 4 is a sectional view of elements of a display panel according to a second exemplary embodiment;

FIG. 5 is a perspective view of a lower polarizing layer of the display panel illustrated in FIG. 4;

FIG. 6 illustrates an example of sub pixels by color with respect to pixels of the display panel illustrated in FIG. 4;

FIG. 7 illustrates an example of a linear grid arrangement of a lower polarizing layer corresponding to each sub pixel as illustrated in FIG. 6 if a color polarizing layer is not used in the display panel illustrated in FIG. 4;

FIG. 8 illustrates a method for forming a retardation layer in the display panel illustrated in FIG. 4; and

FIG. 9 is a block diagram of a display apparatus according to a third exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

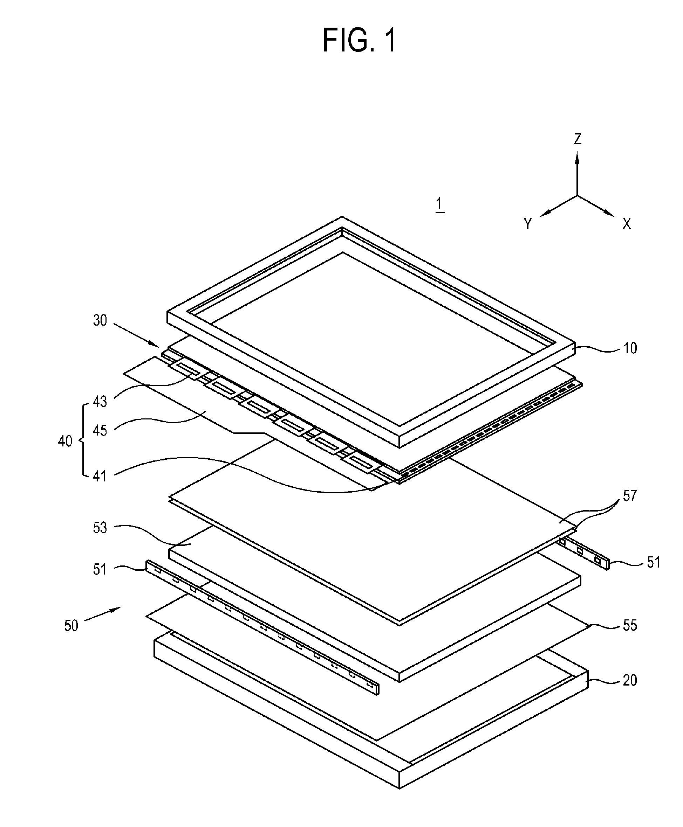

FIG. 1 is an exploded perspective view of a display apparatus 1 according to a first exemplary embodiment.

As shown therein, the display apparatus 1 according to the present exemplary embodiment includes covers 10 and 20 which include an accommodation space therebetween, a display panel 30 which is accommodated within the accommodation space included between the covers 10 and 20 and which displays an image on its front surface, a panel driver 40 which drives the display panel 30, and a backlight device 50 which faces a rear surface of the display panel 30 within the accommodation space included between the covers 10 and 20 and which emits light toward the display panel 30.

Directions which are illustrated in FIG. 1 will be described. Directions X, Y and Z respectively refer to horizontal, vertical and height directions of the display panel 30 in FIG. 1. In FIG. 1, the display panel 30 is provided in an X-Y plane, and each of the covers 10 and 20, the display panel 30 and the backlight unit 50 are provided along an axis of the Z direction. Opposite directions of the X, Y and Z directions (i.e., positive X, positive Y, and positive Z) are referred to as -X, -Y and -Z, , or negative X, negative Y, and negative Z, respectively. The term "X-Y plane" refers to a plane which is formed by axes of the directions X and Y.

The covers 10 and 20 form an external appearance of the display apparatus 1, and support the display panel 30 and the backlight device 50 which are accommodated therein. If the Z direction is a frontward direction and the -Z direction is a rearward direction with respect to the display panel 30, the covers 10 and 20 include a front cover 10 which supports the front side of the display panel 30 and a rear cover 20 which supports the rear side of the backlight device 50. The front cover 10 includes an opening on a plane, which is in parallel with the X-Y plane, for exposing an image display area of the display panel 30 to the outside.

According to the present exemplary embodiment, the display panel 30 is implemented as a liquid crystal display (LCD) panel. The LCD panel 30 has a liquid crystal layer (not shown) which is interposed between two substrates (not shown), and the arrangement of the liquid crystal layer is adjusted by a driving signal which causes a display of an image on the LCD panel 30. The display panel 30 does not emit light by itself, and receives light from the backlight unit 50 in order to display an image on the image display area.

The panel driver 40 applies a driving signal to the display panel 30 for driving the liquid crystal layer. The panel driver 40 includes a gate driving integrated circuit (IC) 41, a data chip film package 43 and a printed circuit board (PCB) 45.

The gate driving IC 41 is formed on a substrate (not shown) of the display panel 30, and connected to each respective gate line (not shown) of the display panel 30. The data chip film package 43 may be connected to each respective data line (not shown) which is formed in the display panel 30. The data chip film package 43 may include a tape automated bonding (TAB) tape in which a semiconductor chip is bonded to a wiring pattern which is formed in a base film by using a TAB technique. For example, a tape carrier package (TCP) or a chip on film (COF) may be used as the data chip film package 43. The PCB 45 transmits a gate driving signal to the gate driving IC 41 and transmits a data driving signal to the data chip film package 43.

Based on the foregoing configuration, the panel driver 40 transmits driving signals to each respective gate line (not shown) and to each respective data line (not shown) of the display panel 30 in order to thereby drive the liquid crystal layer on a pixel-by-pixel basis.

The backlight device 50 is provided in a rear side of the display panel 30, i.e. in the -Z direction of the display panel 30, in order to emit light toward the rear surface of the display panel 30. The backlight device 50 includes a light source 51 which is provided in an edge of the display panel 30, a light guiding plate 53 which is arranged in parallel with the display panel 30 to face the rear surface of the display panel 30, a reflection plate 55 which is provided below the light guiding plate 53 to face a lower surface of the light guiding plate 53 and at least one optical sheet 57 which is interposed between the display panel 30 and the light guiding plate 53.

According to the present exemplary embodiment, an edge backlight device 50 is implemented, which edge backlight device 50 is provided in the lateral side of the light source 51 and the light guiding plate 53 and in which a light emission direction of the light source 51 is perpendicular to the light exit direction of the light guiding plate 53. However, the implementation of the backlight device 50 is not limited to the present exemplary embodiment, and may include various alternative design features. For example, the backlight device 50 may be implemented as a direct backlight unit such that the light source 51 is provided below the light guiding plate 53 and the light emission direction of the light source 51 is oriented in parallel with the light exit direction of the light guiding plate 53.

The light source 51 generates light, and emits the generated light toward the light guiding plate 53. The light source 51 stands on the surface of the display panel 30, i.e., in parallel with the X-Y plane. The light source 51 is arranged along at least one of four edges of the display panel 30 or the light guiding plate 53. The light source 51 is implemented by sequentially arranging a light emitting element (not shown), such as a light emitting diode (LED), on a module substrate (not shown) which extends in the X direction.

The light guiding plate 53 includes a plastic lens which may include, for example, an acryl molding product, or any other suitable type of plastic material, and which uniformly guides light from the light source 51 to the entire image display area of the display panel 30. The light guiding plate 53 has a lower surface in the -Z direction which faces the reflection plate 55, and the light guiding plate 53 also has lateral walls in the Y and -Y directions which face the light source 51. The light is emitted by the light source 51 toward the lateral walls in the Y and -Y directions with respect to the light guiding plate 53.

The light guiding plate 53 includes various optical patterns which are formed in a lower surface and which irregularly reflect light from the light guiding plate 53 or which change a progressive direction of light, and the optical patterns uniformly distribute the light from the light guiding plate 53.

The reflection plate 55 is provided below the light guiding plate 53 and reflects the light which propagates from the light guiding plate 53 back toward the light guiding plate 53. In particular, the reflection plate 55 reflects light which is not reflected by the optical patterns formed in the lower surface of the light guiding plate 53 back toward the light guiding plate 53. To do so, the surface of the reflection plate 55 in the Z direction has a high reflectivity.

At least one optical sheet 57 is provided on the light guiding plate 53 for adjusting the features of the light received from the light guiding plate 53. The optical sheet 57 may include a one or more of diffusion sheet, a prism sheet, a passivation sheet, a dual brightness enhancement film (DBEF) sheet, and/or any other suitable type of optical sheet. Two or more types of sheets may be provided, based on desired final results of optical features to be adjusted.

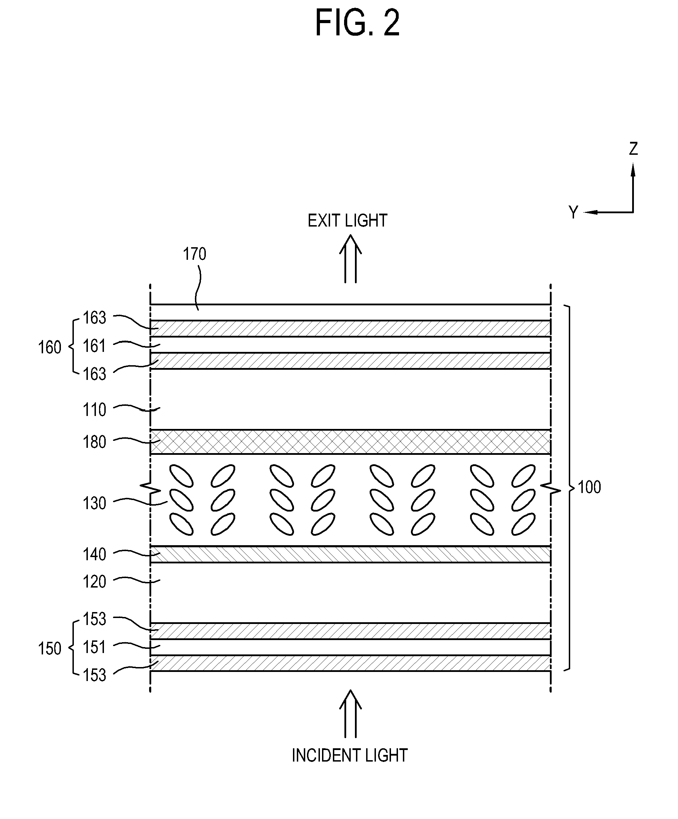

Hereinafter, a detailed configuration of the display panel 100 according to the present exemplary embodiment will be described with reference to FIG. 2. FIG. 2 is a sectional view of elements of the display panel 100. The display panel 100 in FIG. 2 is substantially the same as the display panel 30 illustrated in FIG. 1, and may be employed in the display apparatus 1 illustrated in FIG. 1.

Referring to FIG. 1 and FIG. 2, light which is emitted by the backlight device 50 in the Z direction enters into the display panel 100, passes through various elements of the display panel 100 and then exits in the Z direction. The respective terms "upper" and "lower" which will be described hereinafter are used to express the relative arrangement of the component elements in the Z direction with respect to the progressive direction of light.

The display panel 100 includes an upper substrate 110, a lower substrate 120 which faces the upper substrate 110, a liquid crystal layer 130 which is positioned between the upper substrate 110 and the lower substrate 120, a color filter layer 140 which is interposed between the liquid crystal layer 130 and the lower substrate 120, polarizing films 150 and 160 which are respectively provided in an upper direction with respect to the upper substrate 110 and a lower direction with respect to the lower substrate 120, and a reflection restricting film 170 which is provided on the upper polarizing film 160.

Hereinafter, elements of the display panel 100 will be described in detail.

The upper and lower substrates 110 and 120 are transparent substrates which face each other at a predetermined interval with respect to the progressive direction of light. The upper and lower substrates 110 and 120 may be implemented as glass or plastic substrates. In the case of plastic, the upper and lower substrates 110 and 120 may include at least one of polycarbonate, polyimide (PI), polyethersulphone (PES), polyacrylate (PAR), polyethylenenaphthelate (PEN), polyethyleneterephehalate (PET), and/or any other suitable type of plastic material.

The upper and lower substrates 110 and 120 may be required to have different respective features and/or to be implemented by different respective types of materials, depending on a driving method used by the liquid crystal layer 130. For example, if the driving method used by the liquid crystal layer 130 is a passive matrix method, a soda lime glass may be used for one or both of the upper substrate 110 and the lower substrate 120. If the driving method used by the liquid crystal layer 130 is an active matrix method, alkali free glass and borosilicate glass may be used for one or both of the upper substrate 110 and the lower substrate 120.

The liquid crystal layer 130 is interposed between the upper substrate 110 and the lower substrate 120, and adjusts light transmissivity by varying the arrangement of liquid crystals based on an applied driving signal. An electrode layer (not shown), which includes a transparent material such as conductive indium tin oxide (ITO) or indium zinc oxide (IZO), may be formed between the upper substrate 110 and the liquid crystal layer 130 or between the lower substrate 120 and the liquid crystal layer 130.

Although many liquids do not exhibit regularity with respect to the direction and arrangement of molecules, liquid crystal is similar to a liquid phase which does exhibit regularity to some extent. For example, a certain solid becomes a liquid phase representing an anisotropic nature, such as double refraction, if melted by heat. Liquid crystal may include optical features such as double refraction or color change. Regularity is a nature of crystal and a phase of material may be similar to liquid, and thus a material having those two natures is referred to as liquid crystal. If a voltage is applied to the liquid crystal, the arrangement of molecules varies and the optical feature also varies.

The liquid crystal of the liquid crystal layer 130 may be classified as at least one of nematic, cholesteric, smectic and ferroelectric liquid crystals, depending on the arrangement of molecules.

The color filter layer 140 is interposed between the liquid crystal layer 130 and the lower substrate 120, and filters incident light in order to emit light having a predetermined color to each cell of the liquid crystal layer 130.

The color filter layer 140 converts light received by the display panel 100 into red-green-blue (RGB) color light and transmits the RGB color light to the liquid crystal layer 130. Pixels of the liquid crystal layer 130 include sub pixels which respectively correspond to RGB colors, and the color filter layer 140 filters each sub pixel by color. When light passes through each respective one of the sub pixels, light in different respective colors is emitted from the corresponding sub pixels by the color filter layer 140.

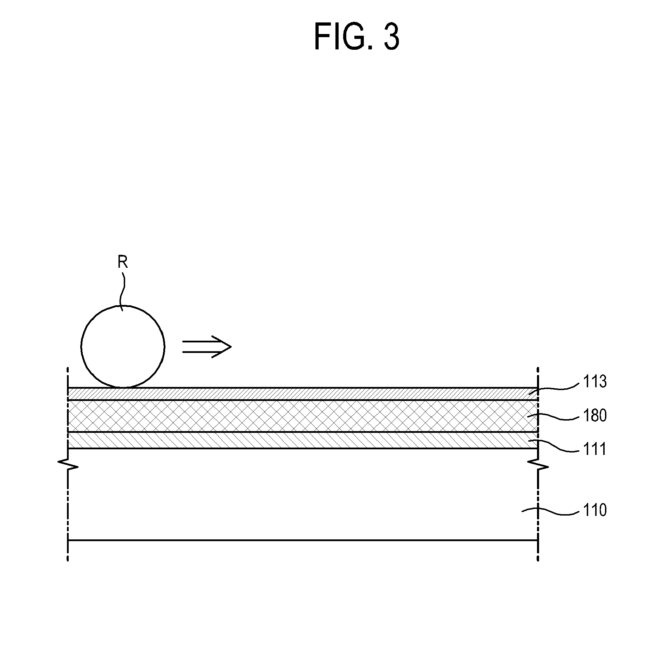

According to the present exemplary embodiment, the color filter layer 140 is provided in the lower substrate 120, but not limited thereto. Alternatively, the color filter layer 140 may be provided in the upper substrate 110, and more specifically, between the upper substrate 110 and the retardation layer 180 which will be described below with reference to FIG. 3.

Each of the polarizing films 150 and 160 polarizes unpolarized light in a particular respective direction, and transmits light which is vibrating in a certain respective direction only, and absorbs light which is vibrating in other directions. The polarizing films 150 and 160 adjust a respective strength of light for transmission, depending on the degree of rotation of a respective polarizing axis with respect to incident light, and allow expression of gray scale in order to enable a user to identify an image on the display panel 100.

The polarizing films 150 and 160 according to the present exemplary embodiment are provided on the upper side of the upper substrate 110 and the lower side of the lower substrate 120, respectively, but not limited thereto. Alternatively, both of the polarizing films 150 and 160 may be installed in one of the two aforementioned sides, depending on the particular design of the display panel 100.

Each of the polarizing films 150 and 160 includes a corresponding polarizing layer 151 and 161 which polarizes light. The polarizing film 150 includes a tri-acetate cellulose (TAC) film 153 which is provided to face a light exit direction and to face a light entrance direction with respect to the polarizing layer 151, and the polarizing film 160 includes a TAC film 163 which is provided to face a light exit direction and to face a light entrance direction with respect to the polarizing layer 161.

Each of the polarizing layers 151 and 161 classifies incident light into two perpendicular polarizing lights and then transmits or absorbs the polarizing lights. The polarizing layers 151 and 161 may be implemented, for example, as polyvinyl alcohol (PVA), and in an exemplary embodiment, a PVA film is stretched in one direction and a polymer chain is cultivated in the stretched direction and then a dichromic iodine molecule or a dichromic dye molecule is dyed in the stretched PVA film and arranged in the stretched direction in order to perform the polarizing function. The dichromic iodine molecule and/or the dye molecule may be arranged in parallel with the stretched direction in order to transmit light which is vibrating in the stretched direction.

The TAC films 153 and 163 are respectively provided on upper and lower sides of the polarizing layers 151 and 161 in order to protect the polarizing layers 151 and 161. The respective surfaces of the TAC films 153 and 163 may be treated in order to include features such as, for example, scattering, enhanced hardness, anti-glare, anti-reflection, and/or any other suitable features, depending on the features which are required for optimizing use of the display panel 100.

The reflection restricting film 170 is provided on the top of the display panel 100. The reflection restricting film 170 performs an anti-glare function with respect to a surface reflection light in order to thereby reduce the surface reflection due to external light. The reflection restricting film 170 may be implemented as an anti-glare film or an anti-reflection film. Alternatively, silicon particles may be sprayed on the TAC film 163 in order to perform the anti-glare function, instead of the employment of the reflection restricting film 170 in the display panel 100.

Referring to FIG. 1 and FIG. 2, based on the foregoing configuration of the display panel 100, light which is emitted by the backlight unit 50 is transmitted to the display panel 100, passes through the polarizing films 150 and 160 and the liquid crystal layer 130, and with the change in the polarizing feature, exits from the display panel 100.

However, liquid crystal is an anisotropic material having two refractive indexes, including an ordinary refractive index and an extraordinary refractive index, and the route and double refractive index of light varies depending on an incident angle of incident light. Due to the foregoing, visibility of the display panel 100 may deteriorate as a result of a respective change to either or both of a contrast ratio and a gray scale inversion, which are used to determine a visibility of a phase.

If a particular liquid crystal is classified as a twisted nematic cell, top and bottom viewing angles become inevitably narrow due to the twisted arrangement of the liquid crystal at 90 degrees. If incident light of the display panel 100 is linearly polarized by the polarizing film 150 and passes through the liquid crystal layer 130 which includes optical anisotropy, retardation values vary between the case in which the light passes through the liquid crystal cell vertically and the case in which the light passes through the liquid crystal cell diagonally. As a result, a retardation of light transmitted by the display panel 100 occurs, and the features of the transmitted light are varied based on the viewing angle.

Accordingly, the display panel 100 according to the present exemplary embodiment includes a retardation layer 180 which is interposed between the upper substrate 110 and the liquid crystal layer 130 and which compensates for a retardation of light which passes through the liquid crystal layer 130 and is received by the upper substrate 100. Then, the viewing angle of the display panel 100 may be improved.

More specifically, the retardation layer 180 may include a negative retardation with respect to a retardation value of the liquid crystal layer 130 according to its liquid crystal features which offsets the optical retardation caused by a double refraction nature included in the liquid crystal layer 130 in order to thereby compensate for the retardation of light which passes through the liquid crystal layer 130.

If the retardation layer 180 is below the liquid crystal layer 130 with respect to the light propagation direction, the retardation layer 180 may not compensate for the retardation of the light caused by the liquid crystal layer 130. If the retardation layer 180 is above the liquid crystal layer 130 with respect to the light propagation direction, such as, for example, if the retardation layer 180 is included in the polarizing film 160, which means that the light which propagates from the liquid crystal layer 130 passes through the upper substrate 110 and then propagates for a predetermined distance prior to reaching the retardation layer 180, errors may become greater at the time of compensating for retardation.

Accordingly, the retardation layer 180 may precisely compensate for the retardation of the liquid crystal layer 130 by being interposed between the upper layer 110 and the liquid crystal layer 130. If the retardation layer 180 is interposed between the upper substrate 110 and the liquid crystal layer 130, the retardation layer 180 may be positioned on the surface of the upper substrate 110 before the liquid crystal layer 130 is filled between the upper substrate 110 and the lower substrate 120 during the manufacturing process of the display panel 100. In such a case, the manufacturing process may be simpler than the case in which the retardation layer 180 is not interposed between the upper substrate 110 and the lower substrate 120.

FIG. 3 illustrates a method for forming the retardation layer 180 according to the present exemplary embodiment.

As shown in FIG. 3, a manufacturer, before filling the liquid crystal layer 130 between the upper and lower substrates 110 and 120, forms an electrode layer 111 which may include, for example, ITO, on a flat surface of the upper substrate 110, and deposits polymer on the electrode layer 111 to form the retardation layer 180. The flat surface of the upper substrate 110, on which the electrode layer 111 and the retardation layer 180 are formed, faces the lower substrate 120 on the display panel 100.

The manufacturer applies an alignment material, such as, for example, polyimide, on the retardation layer 180 in order to form an alignment layer 113. The purpose of the alignment layer 113 is to uniformly align liquid crystal molecules of the liquid crystal layer 130 between the upper and lower substrates 110 and 120.

After the alignment layer 113 is formed, the manufacturer rubs the alignment layer in one direction by using a roller R or a cloth. As a result of the rubbing operation, a polymer surface is formed in a certain thickness on the alignment layer 113.

The manufacturer performs a process which is similar to the process described above with respect to the upper substrate 110, with respect to the lower substrate 120, excluding the formation of the retardation layer 180, and if liquid crystal is filled between the upper and lower substrates 110 and 120, the liquid crystal molecules are uniformly aligned by the alignment layer 113 to form the liquid crystal layer 130.

Alternatively, the alignment may be performed by radiating ultraviolet rays in a non-contact manner instead of by using the roller R with respect to the alignment layer 113 for the rubbing operation.

By the foregoing method, the retardation layer 180 may be formed between the upper substrate 110 and the liquid crystal layer 130.

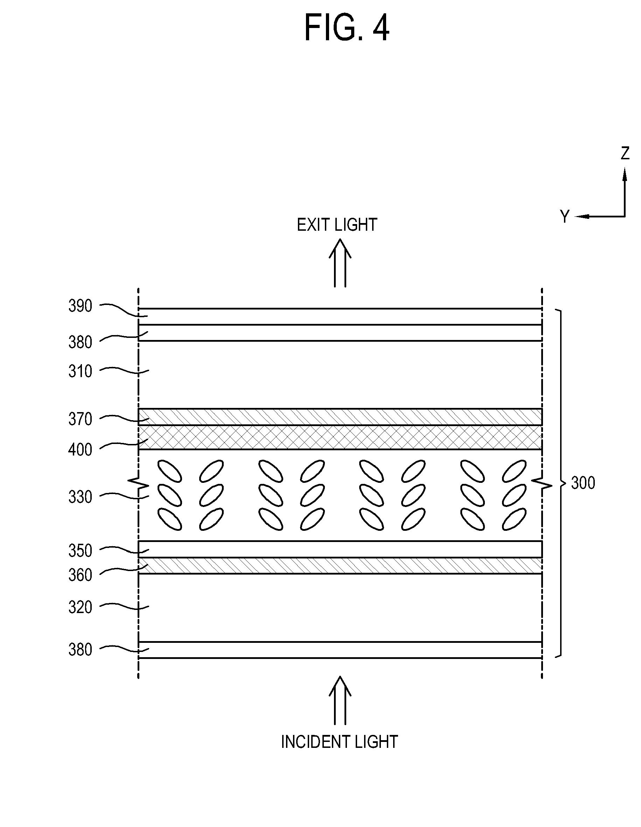

Hereinafter, a detailed configuration of a display panel 300 according to a second exemplary embodiment will be described with reference to FIG. 4. FIG. 4 is a sectional view of elements of the display panel 300 according to the present exemplary embodiment. The display panel 300 in FIG. 4 may be employed in the display apparatus 1 in FIG. 1.

Referring to FIG. 1 and FIG. 4, light which is emitted in a Z direction Z from a backlight unit 50 enters into the display panel 300, passes through various elements of the display panel 300 and then exits in the Z direction.

The display panel 300 includes an upper substrate 310, a lower substrate 320 which faces the upper substrate 310, a liquid crystal layer 330 which is positioned between the upper and lower substrates 310 and 320, a color filter layer 350 which is interposed between the liquid crystal layer 330 and the lower substrate 320, a lower polarizing layer 360 which is provided on the lower substrate 320, an upper polarizing layer 370 which is provided below the upper substrate 310 with respect to the light propagation direction, a passivation film 380 which is provided on external sides of each of the upper substrate 310 and the lower substrate 320, respectively, and a reflection restricting film 390 which is provided on the upper passivation film 380.

Hereinafter, the elements of the display panel 300 will be described in detail.

The upper and lower substrates 310 and 320 are transparent substrates which face to each other at a predetermined interval therebetween with respect to a progressive direction of light. The upper and lower substrates 310 and 320 may include a glass or plastic material, and if a plastic substrate is employed, at least one of polycarbonate, PI, PES, PAR, PEN or PET may be used.

The upper and lower substrates 310 and 320 may be required to have different respective features and/or to be implemented by different respective types of materials, depending on a driving method used by the liquid crystal layer 330. For example, if a driving method used by the liquid crystal layer 330 is a passive matrix method, a soda lime glass may be used for one or both of the upper substrate 310 and the lower substrate 320. If a driving method used by the liquid crystal layer 330 is an active matrix method, alkali free glass and borosilicate glass may be used for one or both of the upper substrate 310 and the lower substrate 320.

The liquid crystal layer 330 is interposed between the upper substrate 310 and the lower substrate 320, and adjusts light transmissivity by varying the arrangement of liquid crystals based on an applied driving signal. Although many liquids do not exhibit regularity with respect to the direction and arrangement of molecules, liquid crystal is similar to a liquid phase which does exhibit regularities to some extent. For example, a certain solid becomes a liquid phase representing an anisotropic nature, such as double refraction, if melted by heat. Liquid crystal may include optical features such as double refraction or color change. Regularity is a nature of crystal and a phase of a material may be similar to liquid, and thus a material having those two natures is referred to as liquid crystal. If a voltage is applied to the liquid crystal, the arrangement of molecules varies and thus the optical features also vary.

The liquid crystal of the liquid crystal layer 330 may be classified as at least one of nematic, cholesteric, smectic, and ferroelectric liquid crystals, depending on the arrangement of molecules.

The color filter layer 350 is interposed between the liquid crystal layer 330 and the lower substrate 320, and filters incident light in order to emit light having a predetermined color to each cell of the liquid crystal layer 330.

The color filter layer 350 converts light entering into the display panel 300 into RGB colors and transmits the light to the liquid crystal layer 330. The pixels of the liquid crystal layer 330 include sub pixels which respectively correspond to RGB colors, and the color filter layer 350 filters the sub pixels by color. When light passes through each respective one of the sub pixels, light in different respective colors is emitted from the corresponding sub pixels by the color filter layer 350.

In the present exemplary embodiment, the color filter layer 350 is provided in the lower substrate 320, but not limited thereto. Alternatively, the color filter layer 350 may be provided in the upper substrate 310, and more particularly, provided between the upper polarizing layer 370 and a retardation layer 400 which will be described below.

The lower polarizing layer 360 is positioned between the lower substrate 320 and the color filter layer 350, and the upper polarizing layer 370 is positioned between the upper substrate 310 and the liquid crystal layer 330. Each of the lower and upper polarizing layers 360 and 370 transmits light in a predetermined polarizing direction with respect to incident light, and to do so, each of the lower polarizing layer 360 and the upper polarizing layer 370 has a linear grid arranged in a respective pitch at a respective predetermined interval. The detailed configurations of each of the lower and upper polarizing layers 360 and 370 will be described below.

In the present exemplary embodiment, the upper and lower polarizing layers 370 and 360 are respectively positioned above and below the liquid crystal layer 330 in the upper and lower substrates 310 and 320, but depending on the design of the display panel 300, either one of the lower polarizing layer 360 or the upper polarizing layer 370 may be installed in the absence of the other.

The passivation film 380 respectively protects each of the upper and lower substrates 310 and 320 by covering each of the upper side of the upper substrate 310 and the lower side of the lower substrate 320, i.e., the respective external sides of each of the upper and lower substrates 310 and 320.

The reflection restricting film 390 is provided on the top of the display panel 300. The reflection restricting film 390 performs an anti-glare function with respect to a surface reflection light in order to thereby reduce surface reflection due to external light. The reflection restricting film 390 may be implemented as an anti-glare film or anti-reflection film. Alternatively, silicon particles may be sprayed on the passivation film 380 in order to perform the anti-glare function, instead of the employment of the reflection restricting film 390 in the display panel 300.

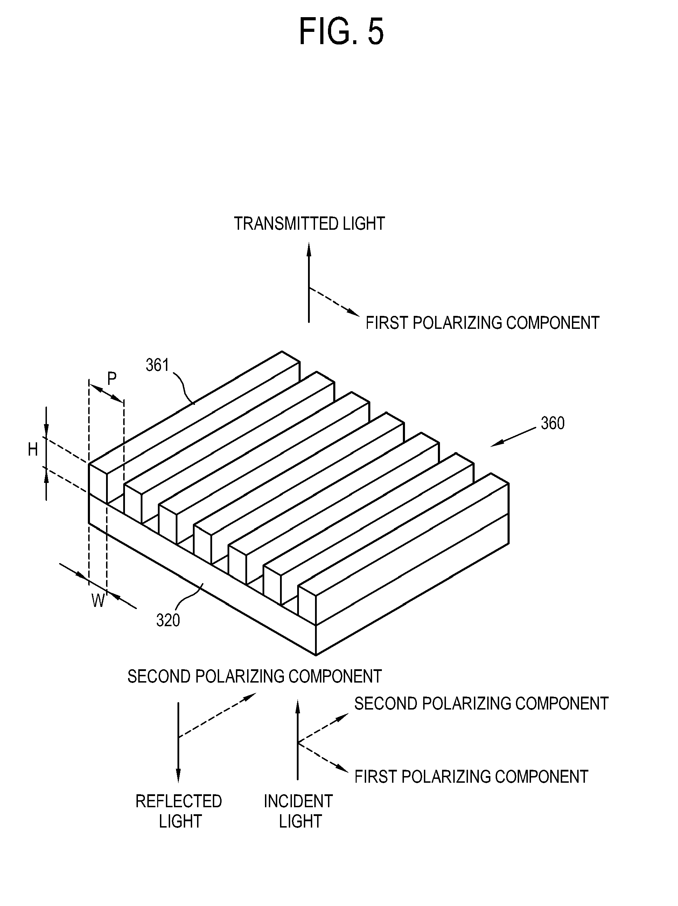

Hereinafter, the configuration of the lower polarizing layer 360 will be described with reference to FIG. 5. FIG. 5 is a perspective view of the lower polarizing layer 360.

Referring to FIG. 5, the lower polarizing layer 360 includes a linear grid 361 which is shaped like a sequence of bars which is arranged in a predetermined direction on the lower substrate 320. The linear grid 361 is arranged regularly and uniformly, with each bar having a predetermined height H, width W and pitch P.

If the predetermined pitch P of each bar of the linear grid 361 is adjusted to 1/2 or less of a wavelength of light, no diffractive wave is formed, and there are only transmissive light and reflective light. When incident light passes through the linear grid 361 which is shaped like a slit, a first polarizing component which is perpendicular to the linear grid 361 passes through the lower substrate 320 and a second polarizing component which is in parallel with the linear grid 361 is reflected. In particular, light which passes through the lower polarizing layer 360 is polarized in a predetermined direction.

The lower polarizing layer 360 may be formed by depositing a metal layer on the lower substrate 320, and patterning a grid by using a nano imprint lithography (NIL) process. Then, a result of polarizing incident light is reflected when the polarized light is in parallel with the grid, and the polarized light is transmitted when the polarized light is perpendicular to the grid.

The light which does not pass through the lower polarizing layer 360 and is instead reflected is not absorbed by the lower polarizing layer 360, and may be reflected toward the display panel 300. In particular, if the lower polarizing layer 360 is employed in the display panel 300, referring also to FIG. 1, an entire light efficiency may be improved without using an optical sheet 57 such as a DBEF film.

The same principle which applies to the lower polarizing layer 360 applies to the upper polarizing layer 370. A linear grid (not shown) may be formed in one surface of the upper substrate 310 by using a similar method as that described above with respect to the lower polarizing layer 360, and the upper polarizing layer 370 transmits polarized light only in a predetermined direction in accordance with the same principle as that described above with respect to the lower polarizing layer 360.

The respective polarizing direction of each of the upper and lower polarizing layers 370 and 360 may be the same or different, and may be changed at the design phase of the display panel 300. The display panel 300 may adjust the state of the liquid crystal of the liquid crystal layer 330 based on a design of the alignment direction, and may be designed to block or transmit light based on a supply and/or non-supply of a voltage to the liquid crystal layer 330, and thus the respective polarizing direction of each of the upper and lower polarizing layers 370 and 360 may not necessarily be perpendicular to each other.

However, as light reflected by the lower polarizing layer 360 may enter into the display panel 300 again, the reflected light is transmitted to the liquid crystal layer 330 if the upper polarizing layer 370 provided on the liquid crystal layer 330 includes a highly reflective material similar to that of the lower polarizing layer 360. Accordingly, the upper polarizing layer 370 may have a low reflectivity and high light absorption rate unlike the lower polarizing layer 360.

Referring to FIG. 1 and FIG. 4, based on the foregoing configuration of the display panel 300, light is transmitted by the backlight device 50 to the display panel 300, and then passes through the lower substrate 320, the lower polarizing layer 360, the liquid crystal layer 330, the upper polarizing layer 370 and the upper substrate 310 and exits from the display panel 300.

However, as the liquid crystal is an anisotropic material having two refractive indexes, including an ordinary refractive index and an extraordinary refractive index, and thus a path and a double refractive index of light vary. As a result, visibility of the display panel 300 may deteriorate due to a respective change in either or both of a contrast ratio and a gray scale inversion which are a basis for determining visibility of a phase, depending on a viewing angle.

In particular, if a liquid crystal is classified as TN cells, the alignment of liquid crystal is twisted at 90 degrees, and the upper and lower viewing angles become inevitably narrow. If the incident light of the display panel 300 is polarized by the lower polarizing layer 360 and passes through the liquid crystal layer 330 which has an optical anisotropy, retardation values vary between the case in which the light passes through the liquid crystal cells vertically and the case in which the light passes through the liquid crystal cells diagonally. As a result, a retardation of light exiting from the display panel 300 occurs, and the nature of the transmissive light varies depending on the viewing angle.

The display panel 300 according to the present exemplary embodiment includes the retardation layer 400 which is interposed between the upper substrate 310 and the liquid crystal layer 330, and which compensates for retardation of light which passes through the liquid crystal layer 330 and is received by the upper substrate 310. Thus, the viewing angle of the display panel 300 may be improved.

More specifically, the retardation layer 400 may include a negative retardation with respect to a retardation value of the liquid crystal layer 330 according to the nature of the liquid crystal which offsets the optical retardation caused by a double refraction nature included in the liquid crystal layer 330 in order to thereby compensate for retardation of light which passes through the liquid crystal layer 330.

If the retardation layer 400 is provided below the liquid crystal layer 330 with respect to the light propagation direction, the retardation layer 400 may not compensate for the retardation of light of the liquid crystal layer 330. If the retardation layer 400 is interposed between the upper substrate 310 and the upper polarizing layer 370, the light which passes through the liquid crystal layer 330 is polarized by the upper polarizing layer 370 and the accuracy of retardation may be reduced correspondingly.

Accordingly, the retardation layer 400 is interposed between the upper polarizing layer 370 and the liquid crystal layer 330 to thereby accurately compensate for the optical retardation of the liquid crystal layer 330. If the retardation layer 400 is formed in the upper substrate 310, the retardation layer 400 may be positioned on the surface of the upper substrate 310 before the liquid crystal layer 330 is filled between the upper substrate 310 and the lower substrate 320 during the manufacturing process of the display panel 300. In this case, the manufacturing process may be simpler than the case in which the retardation layer 400 is not interposed between the upper and lower substrates 310 and 320.

In the foregoing exemplary embodiment, the display panel 300 includes the color filter layer 350. However, the color filter layer 350 may be excluded from the display panel 300 depending on the implementation of the lower polarizing layer 360. In such a case, the lower polarizing layer 360 may serve as the color filter layer 350.

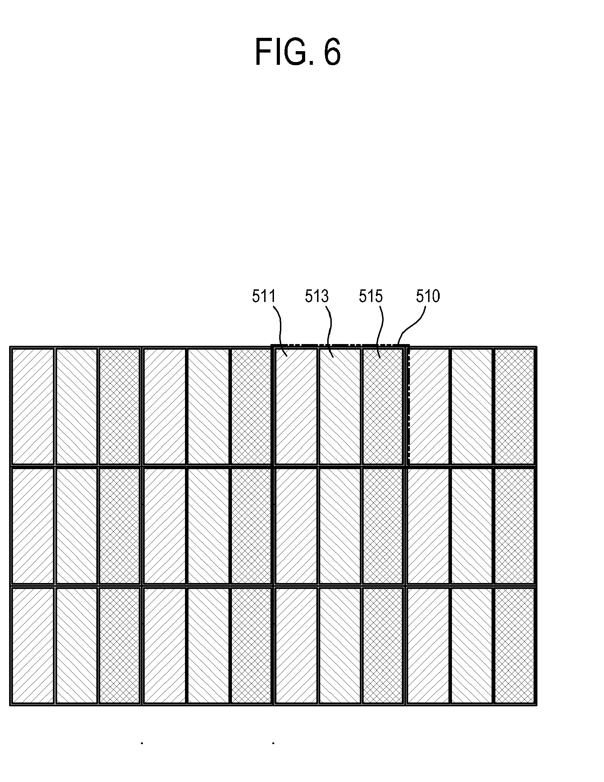

FIG. 6 illustrates sub pixels 511, 513 and 515 per color, with respect to each pixel 510 of the liquid crystal layer 330.

As shown therein, the pixel 510 includes three sub pixels 511, 513 and 515 which respectively correspond to the three colors of RGB. In particular, the pixel 510 includes a red sub pixel 511 which corresponds to a light exit area having a red color, a green sub pixel 513 which corresponds to a light exit area having a green color, and a blue sub pixel 515 which corresponds to a light exit area having a blue color.

The linear grid 361 of the lower polarizing layer 360 is formed to have different respective pitches which respectively correspond to the respective sub pixels 511, 513 and 515.

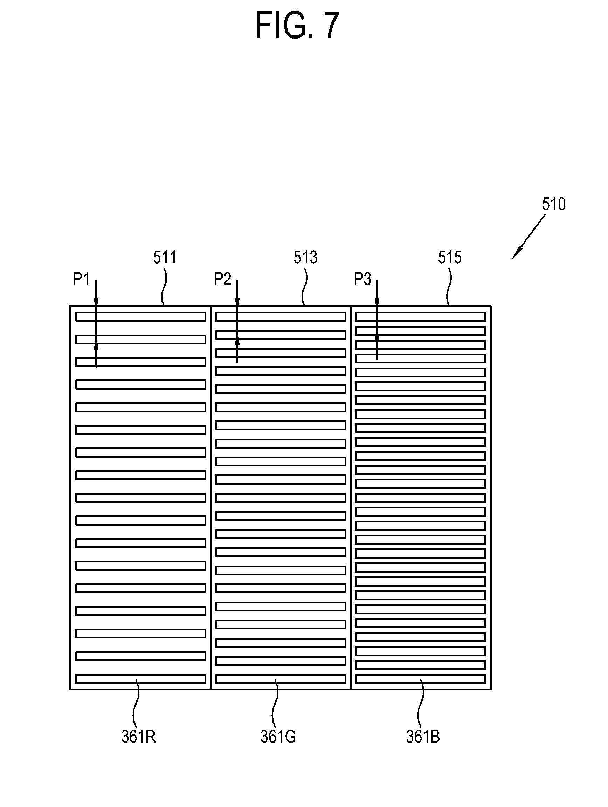

FIG. 7 illustrates linear grids 361 R, 361 G and 361 B of the lower polarizing layer 360 which respectively correspond to the sub pixels 511, 513 and 515 illustrated in FIG. 6.

Referring to FIG. 7, the lower polarizing layer 360 includes a red linear grid 361 R which is positioned in a corresponding area of the red sub pixel 511, a green linear grid 361 G which is positioned in a corresponding area of the green sub pixel 513, and a blue linear grid 361 B which is positioned in a corresponding area of the blue sub pixel 515.

Each of respective pitches P1, P2 and P3 of the corresponding color linear grids 361 R, 361 G and 361 B is predetermined to have an interval which corresponds to the respective color. For example, the pitch P1 of the red linear grid 361 R is smaller than 1/2 of a wavelength of red light, the pitch P2 of the green linear grid 361G is smaller than 1/2 of a wavelength of green light, and the pitch P3 of the blue linear grid 361B is smaller than 1/2 of a wavelength of blue light. As described above, the respective pitches of the respective linear grids 361 R, 361 G and 361 B vary by the sub pixels 511, 513 and 515 so as to adjust the wavelength of the incident light and such that light in different respective colors is emitted by each respective one of the sub pixels 511, 513 and 515.

The pitch P1 of the red linear grid 361 R is approximately equal to between 330 nm and 390 nm which is smaller than 1/2 of the wavelength of the red light, and the incident light is changed into red light having a predetermined first polarizing component when passing through the red linear grid 361 R. Correspondingly, the pitch P2 of the green linear grid 361 G is approximately equal to between 250 nm and 290 nm, and the pitch P3 of the blue linear grid 361 B is approximately equal to between 220 nm and 240 nm. In particular, the respective pitches P1, P2 and P3 of the linear grids 361 R, 361 G and 361 B become smaller in the order of R, G and B. However, these figures are an example, and do not limit the spirit of the present disclosure.

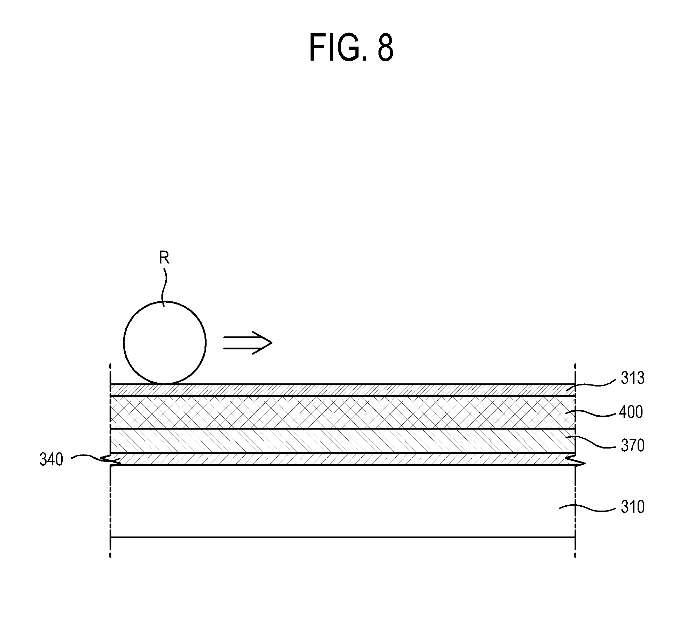

FIG. 8 illustrates a method for forming the retardation layer 400 according to the present exemplary embodiment.

Referring to FIG. 8, the manufacturer forms the electrode layer 340 on the surface of the upper substrate 310 and forms the upper polarizing layer 370 on the electrode layer 340 before filling the liquid crystal layer 330 between the upper and lower substrates 310 and 320. The upper polarizing layer 370 may be formed by sputtering the metal layer on the upper substrate 310 and the electrode layer 340, followed by patterning using a suitable patterning method, such as, for example, at least one of depositing, masking, exposing, developing and etching processes.

A planarization layer is formed on the upper polarizing layer 370, and then a polymer is deposited on the planarization layer to form the retardation layer 400.

The manufacturer applies an alignment material, such as, for example, polyimide on the retardation layer 400 in order to form the alignment layer 313. The treatment of the alignment layer 313 is performed in order to uniformly align liquid crystal molecules of the liquid crystal layer 330 between the upper and lower substrates 310 and 320.

After the alignment layer 113 is formed, the manufacturer rubs the alignment layer 313 in one direction by using a roller R or a cloth. As a result of the rubbing operation, a polymer surface is formed in a certain thickness on the alignment layer 313.

The manufacturer treats the lower substrate 120 by using a process which is similar to the process described above with respect to the upper substrate 110, and fills the liquid crystal between the upper and lower substrates 310 and 320. Thus, the liquid crystal layer 330 by which liquid crystal molecules are uniformly aligned by the alignment layer 313 is formed.

Alternatively, the alignment may be performed by radiating ultraviolet rays in a non-contact manner instead of by using the roller R with respect to the alignment layer 313 for the rubbing operation.

By the foregoing method, the retardation layer 400 may be formed between the upper substrate 310 and the liquid crystal layer 1330.

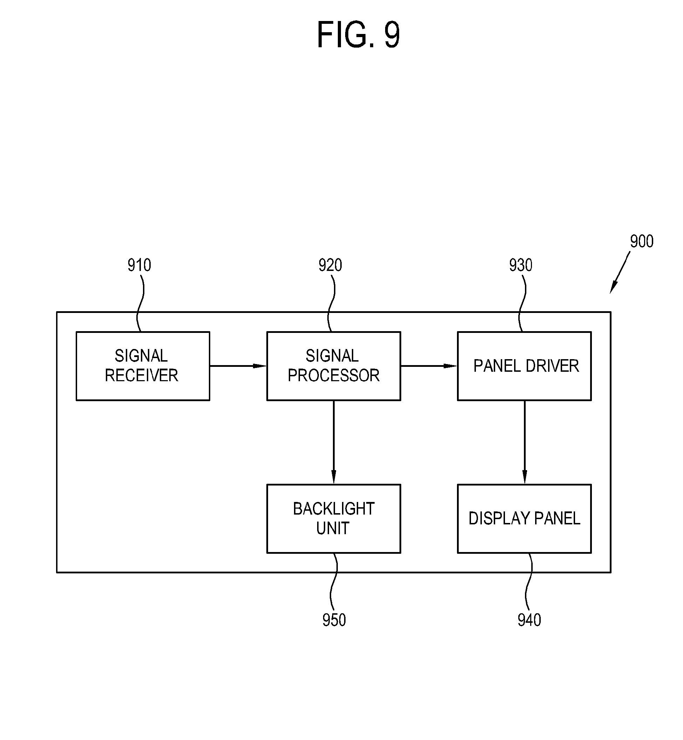

Hereinafter, a display apparatus 900 according to a third exemplary embodiment will be described with reference to FIG. 9. FIG. 9 is a block diagram of the display apparatus 900 according to the present exemplary embodiment.

Referring to FIG. 9, the display apparatus 900 includes a signal receiver 910 which receives an image signal, a signal processor 920 which processes the image signal received by the signal receiver 910, based on a predetermined image processing operation, a panel driver 930 which outputs a driving signal which corresponds to the image signal processed by the signal processor 920, a display panel 940 which displays an image thereon based on the image signal which corresponds to the driving signal outputted by the panel driver 930, and a backlight device 950 which emits light toward the display panel 940 corresponding to the image signal processed by the signal processor 920.

The display apparatus 900 according to the present exemplary embodiment may be implemented as any one or more of various types of devices which may display an image such as a TV, a monitor, a portable media player (PMP) and a mobile phone.

The signal receiver 910 receives image signals and/or image data and transmits the received image signals and/or image data to the signal processor 920. The signal receiver 910 may vary depending on a standard relating to a received image signal and the implementation type of the display apparatus 900. For example, the signal receiver 910 may receive a radio frequency (RF) signal from a broadcasting station (not shown) in a wireless manner and/or an image signal in a wired manner according to one or more standards such as composite video, component video, super video, SCART, high definition multimedia interface (HDMI), DisplayPort, unified display interface (UD), or wireless HD. If an image signal includes a broadcasting signal, the signal receiver 910 includes a tuner for tuning the broadcasting signal by channel. Alternatively, the signal receiver 910 may receive an image data packet from a server (not shown) via a network.

The signal processor 920 performs various image processing operations upon the image signal received by the signal receiver 910. The signal processor 920 may output the processed image signal to the panel driver 930 in order to thereby display an image on the display panel 940 based on the image signal.

The image processing operation of the image processor 920 may include at least one of a decoding operation corresponding to an image format of image data, a de-interlacing operation for converting interlaced image data into progressive image data, a scaling operation for adjusting an image signal into a signal having a predetermined resolution, a noise reduction operation for improving an image quality, a detail enhancement operation, a frame refresh rate conversion operation, and/or any other suitable image processing operation, but is not limited thereto.

The signal processor 920 may be implemented as a system-on-chip (SOC) which integrates one or more of the foregoing functions, or as an image processing board (not shown) which is formed by mounting individual elements which perform the one or more of the foregoing operations independently on a printed circuit board (PCB), and which image processing board is installed in the display apparatus 900.

The elements of the panel driver 930, the display panel 940 and the backlight unit 950 are substantially the same as those according to the first exemplary embodiment, and thus detailed description will be omitted.

Although a few exemplary embodiments have been shown and described, it will be appreciated by those skilled in the art that changes may be made in these exemplary embodiments without departing from the principles and spirit of the present disclosure, the range of which is defined in the appended claims and their equivalents.

## Claims

1. A display panel (30) of a display apparatus (1) comprising:
an upper substrate (110);
a lower substrate (120) which faces the upper substrate (110);
a liquid crystal layer (130) which is positioned between the upper and lower substrates (110, 120); and
a retardation layer (180) which is interposed between the upper and lower substrates (110, 120) and which compensates for a retardation of light which is caused by the liquid crystal layer (130) when the light passes through the liquid crystal layer (130) and is received by the upper substrate (110).

2. The display panel (30) according to claim 1, wherein the retardation layer (180) has a negative retardation which offsets an optical retardation caused by a double refraction nature included in the liquid crystal layer (130).

3. The display panel (30) according to claim 2, further comprising a polarizing film (150, 160) which is provided in at least one of a light exit direction of the upper substrate (110) and a light entrance direction of the lower substrate (120) and which transmits light in a preset polarizing direction with respect to incident light.

4. The display panel (30) according to claim 3, further comprising a color filter layer (140) which is interposed in at least one of between the liquid crystal layer (130) and the lower substrate (120) or between the upper substrate (110) and the retardation layer (180), and which filters incident light such that light having a predetermined color is received by each cell of the liquid crystal layer.

5. The display panel (30) according to claim 3, wherein the polarizing film (150, 160) comprises a polarizing layer (151, 161) which polarizes light, and a tri-acetate cellulose (TAC) film (153, 163) which is provided in each of a light exit direction of the polarizing layer and a light entrance direction of the polarizing layer and which protects the polarizing layer (150, 160).

6. The display panel (30) according to claim 3, wherein the polarizing film (150, 160) does not comprise the retardation layer (180).

7. The display panel (300) according to claim 2, further comprising a polarizing layer (360, 370) which is positioned in at least one of between the upper substrate (310) and the liquid crystal layer (330) or between the lower substrate (320) and the liquid crystal layer (330), and which has a linear grid arranged in a predetermined pitch to transmit light in a preset polarizing direction with respect to incident light.

8. The display panel (300) according to claim 7, wherein the retardation layer (400) is interposed between the polarizing layer (370) and the liquid crystal layer (330) if the polarizing layer is positioned between the upper substrate (310) and the liquid crystal layer (330).

9. The display panel (300) according to claim 7, further comprising a color filter layer (350) which is interposed in at least one of between the liquid crystal layer (330) and the lower substrate (320) or between the liquid crystal layer (330) and the upper substrate (310), and which filters incident light such that light having a predetermined color is received by each pixel of the liquid crystal layer.

10. The display panel (300) according to claim 7, wherein each pixel of the liquid crystal layer (330) comprises a plurality of sub pixels corresponding to a plurality of colors, and at least one of a first polarizing layer (370) positioned between the upper substrate (310) and the liquid crystal layer (330) or a second polarizing layer (360) positioned between the lower substrate (320) and the liquid crystal layer (330) has an interval of the predetermined pitch set to correspond to a wavelength of each respective color such that light having each color is received by the plurality of sub pixels.

11. A display apparatus (1) comprising:
a display panel (30) according to any one of claims 1 to 10; and
a backlight unit (50) which emits light toward the display panel to display an image on the display panel (30).

12. The display apparatus (1) according to claim 11, wherein the backlight unit (50) comprises a light source (51) which emits light;
a light guiding plate (53) which guides the emitted light from the light source (51) to the display panel (30); and
an optical sheet (57) which is interposed between the light guiding plate (53) and the display panel (30).

13. The display apparatus (1) according to claim 11, further comprising a signal receiver which receives an image signal; and
a signal processor which processes the received image signal according to a preset image processing operation to display an image on the display panel based on the received image signal.
